# EUROPEAN PATENT SPECIFICATION

(11) **EP 3 385 524 B1**
(45) Date of publication and mention of the grant of the patent: **17.07.2019**
(21) Application number: 17164629.2
(22) Date of filing: 03.04.2017
(51) Int. Cl.: F02B 29/04, F02M 31/04, F02M 31/10

(54) **SYSTEM FOR CONTROLLING AN INTAKE TEMPERATURE OF CHARGE AIR**
SYSTEM ZUR STEUERUNG EINER EINGANGSTEMPERATUR VON LADELUFT
SYSTÈME PERMETTANT DE RÉGULER UNE TEMPÉRATURE D'ADMISSION D'AIR DE SURALIMENTATION

(43) Date of publication of application: 10.10.2018
(73) Proprietor: DENSO CORPORATION, Kariya-city, Aichi-ken 448-8661 (JP); DENSO THERMAL SYSTEMS S.p.A., 10046 Poirino (Torino) (IT)
(72) Inventor: QUECK, Dirk, 41844 Wegberg (DE); HERRMANN, Olaf, 41844 Wegberg (DE); VISSER, Sebastian, 41844 Wegberg (DE); BIGLIA, Matteo, 10046 Poirino (Torino) (IT); MASSANO, Cristiano, 10046 Poirino (IT)
(74) Representative: Kuhnen & Wacker Patent- und Rechtsanwaltsbüro PartG mbB

(56) References cited:
- EP-A1- 2 957 744
- WO-A1-2009/128768
- WO-A1-2015/066253
- US-A- 4 317 439
- US-A1- 2005 000 473
- US-A1- 2006 225 417
- US-A1- 2013 298 554

## Description

The present invention relates to a system for controlling an intake temperature of charge air which is fed to an intake manifold of an internal combustion engine of a powertrain of a vehicle.

In recent years, exhaust emissions of vehicles are facing challenging restrictions due to increasingly severe environmental regulations to air pollution by carbon oxides, nitric oxides, particulate matter or hydrocarbons. Hence, in the last decades more complex exhaust aftertreatment system arose including catalytic converter devices and particulate filters.

Another key to a more efficient combustion resulting in lower fuel consumption and thus lower emissions, is the monitoring and setting of the intake air temperature of an internal combustion engine, to ensure optimized combustion conditions with respect to an operation state. At high intake air temperatures, for example by compressing the suctioned ambient air by means of a turbo charger or compressor, a high molar volume of an air fuel mixture results in a low concentration of reactants input per suction stroke of a cylinder despite a high pressure appliance. At low intake air temperatures, e.g. at a cold engine start, cold conditions or charge air compression in a low range of rotational engine speed, a low molar volume of the air fuel mixture results in a high concentration of reactants input per suction stroke of a cylinder. However, a cold reaction temperature affects an efficient combustion characteristic within the cylinder, leading to deteriorations of the emissions, e.g. the release of unburned hydrocarbons.

Nowadays, modern vehicles having a turbo charged or compressor charged internal combustion engine and an exhaust aftertreatment system are equipped with an intercooler, i.e. a water-cooled charge-air cooler arranged between a turbo or compressor charger and the internal combustion engine, as well as an exhaust gas recirculation (EGR) for returning a part of exhaust gas back into the combustion chambers. In order to confine an intake air temperature to a preferred temperature range for efficient combustion, the intake air temperature can be controlled by cooling the hot compressed charge air on the one side, or introducing an increased amount of hot exhaust gas to be mixed with the fresh intake air, on the other side.

In prior art, the latter measure for raising the intake air temperature is performed by using either one or both of a high pressure exhaust gas recirculation (HP-EGR) arranged in a section of an exhaust line upstream to a turbine of the turbo charger, or a low pressure exhaust gas recirculation (LP-EGR) arranged in a section of the exhaust line downstream to an exhaust aftertreatment device.

Patent application WO 2004 044 401 A1 discloses a system including a water-cooled charge air cooler having two stages for a high temperature and a low temperature coolant, as well as a high pressure and a low pressure exhaust gas recirculation.

Recent approaches of raising the intake air temperature by means of mixing exhaust gas recirculation, such as disclosed in the patent application WO 2004 044 401 A1, reveal several disadvantages. The use of high pressure exhaust gas recirculation compromises the performance of the turbo charger and significantly raises introduction of soot to the engine components or leading to clogging of an EGR-valve due to the high rate of particulate matter. The use of low pressure exhaust gas recirculation provides a better turbo charger performance and better fuel consumption. However, when an engine warm up is required, a lower intake manifold gas temperature is achieved due to lower downstream exhaust temperatures before recirculation, thus requiring a higher recirculation amount and a poor mixture for achieving a higher intake air temperature.

Patent application WO 2009 128 768A1 discloses an other system including a high temperature charge air cooler and a low temperature charge air cooler arranged in series in a charge air duct, and respectively connected to a high temperature coolant loop and a low temperature coolant loop. In order to prevent or remove ice formation in the low temperature charge air cooler, two three-way valves are configured to temporarily connect the high temperature coolant loop to the low temperature charge air cooler.

It is therefore an object of the invention to provide a system for controlling an intake air temperature of an internal combustion engine, which provides more efficient combustion characteristics and therefore better emission characteristics.

According to the invention, the object is solved by a system as defined in claim 1 or claim 6.

Hence, the system according to the invention implements a thermal management of intake air by means of a water-to-charge air heat exchanger providing not only a cooling function but also a heating function, wherein, in particular, the heating is realized independently from the use or even the presence of a HP-EGR in the system. The thermal management of intake air is realized by a dedicated switchable piping and control of switching of two volume flows of different temperature coolants circulating through the water-to-charge air heat exchanger.

As a result the system according to the invention introduces a new concept of thermal management of intake air dominantly advantageous in operation states, when the engine side coolant temperature has become higher than the ambient temperature, and where the intake air temperature is insufficiently increased by low compression of the turbo charger, i.e. at low rotational engine speed.

Due to the control of the temperature-volume ratio instantly circulating through the water-to-charge air heat exchanger, the system according to the invention provides a fast measure to supply an intake air target temperature at quick transitions between function modes by switching the connections of coolant loops.

By optimizing efficient combustion conditions based on ensuring a target intake air temperature range on the fresh air intake side, instead of the exhaust gas recirculation side, the system according to the invention avoids a loss of performance of the turbo charger due to an upstream arranged HP-EGR, avoids raised introduction of particulate matter or soot to the intake side of the engine, or avoids a poor mixture of recirculated exhaust gas and fresh air fuel ratio.

The employment of the system according to the invention can also substantially eliminate the need for a high pressure exhaust gas recirculation in terms of its utilization for heat influx, thus enabling a simplification, lower costs and higher reliability compared to conventional complex EGR systems requiring a separate cooling of the HP-EGR-valve due to the high temperature exposure upstream in the exhaust line.

According to the invention, the control device is coupled to a pump driving the low temperature coolant loop; and in a heating mode, when the intake air temperature is to be heated up to the selected target temperature, the driving power of the pump is switched off; or in a cooling mode, when the intake air temperature is to be cooled down to the selected target temperature, the driving power of the pump is switched on and controlled in a volume flow.

The pump allows to drive the low temperature coolant loop as a separate coolant section and it is already conventionally provided within a known coolant system for the use of a charge air cooler having two stages. The control of volume flow driven by the pump provides, besides the switchable connections, an additional factor of adapting the coolant temperature and the coolant temperature transition in the water-to-charge air heat exchanger.

According to an aspect of the invention, the water-to-charge air heat exchanger comprises a high temperature exchange stage and a low temperature exchange stage for exchanging heat between a coolant and the air conducted through the charge air duct, respectively; the low temperature exchange stage having an inlet and an outlet connected to the low temperature coolant loop by a supply line and a return line; the high temperature exchange stage having an inlet and an outlet connected to the high temperature coolant loop by a supply line and a return line; wherein the inlet and the outlet of one of the low temperature exchange stage and the high temperature exchange stage are switchable connected to the corresponding one of the low temperature coolant loop and the high temperature coolant loop, and are switchable connected to the supply line and the return line of the other one of the low temperature exchange stage and the high temperature exchange stage via a three-way valve, respectively.

The arrangement of an exchanger setup of two exchange stages and two three-way valves for connecting the two coolant loops provides an elevated configuration of the system according to the invention. This system configuration realizes the benefits of a conventional charge air cooler having two stages, i.e. a subsequent cascade cooling, while achieving a faster temperature transition in the exchange stages and a more consistent temperature maintenance within separate coolant loops, due to a smaller filling volume each exchange stage and a smaller mixing volume effected between the coolant loops during a transition of modes.

According to an aspect of the invention, in a heating mode, when the intake air temperature is heated up to the selected target temperature; the three-way valves are switched to connect the inlet and the outlet of the high temperature exchange stage with the high temperature coolant loop; and are switched to disconnect the inlet and the outlet of the low temperature exchange stage from the low temperature coolant loop.

According to an alternative aspect to this heating mode, the three-way valves can be switched to connect the inlet and the outlet of the downstream stage of the water-to-charge air heat exchanger with the high temperature coolant loop.

In this way, the latter system configuration adopts a state causing a heating up of the intake air temperature by a heat transfer from the coolant to the intake air, i.e. as explained above.

According to an aspect of the invention, in a cooling mode, when the intake air temperature is cooled down to the selected target temperature; the three-way valves are switched to connect the inlet and the outlet of the low temperature exchange stage with the low temperature coolant loop; and are switched to disconnect the inlet and the outlet of the high temperature exchange stage from the high temperature coolant loop, respectively.

According to an alternative aspect to this cooling mode, the three-way valves can be switched to connect the inlet and the outlet of the downstream stage of the water-to-charge air heat exchanger with the low temperature coolant loop.

In this way, the latter system configuration adopts a state causing a cooling down of the intake air temperature by a heat transfer from the intake air to the coolant, i.e. as explained above.

According to an aspect of the invention, the both three-way valves are realized by a six-way valve. This configuration provides a more compact valve design switchable by a single actuator and enabling a space saving advantage.

According to an aspect of the invention, the water-to-charge air heat exchanger comprises a high temperature exchange stage and a low temperature exchange stage for exchanging heat between a coolant and the air conducted through the charge air duct, respectively; the low temperature exchange stage having an inlet and an outlet connected to the low temperature coolant loop by a low temperature supply line and a low temperature return line; the high temperature exchange stage having an inlet and an outlet connected to the high temperature coolant loop by a high temperature supply line and a high temperature return line; wherein the inlet and the outlet of one of the low temperature exchange stage and high temperature exchange stage are switchable connected to the corresponding one of the low temperature coolant loop and the high temperature coolant loop via a two-way valve; and the same inlet and the outlet are switchable connected to the supply line and the return line of the other one of the low temperature coolant loop and the high temperature coolant loop via a two-way valve in an interconnection arranged between the supply lines and between the return lines, respectively.

The arrangement of four two-way valves instead of two three-way valves provides another alternative system configuration for an exchanger setup of two exchange stages.

According to an aspect of the invention, in a heating mode, when the intake air temperature is heated up to the selected target temperature; the two-way valves are switched to connect the inlet and the outlet of the high temperature exchange stage with the high temperature coolant loop; and are switched to disconnect the inlet and the outlet of the low temperature exchange stage from the low temperature coolant loop.

According to an alternative aspect to this heating mode, the two-way valves are switched to connect the inlet and the outlet of the downstream stage of the water-to-charge-air heat exchanger with the high temperature coolant loop.

According to an aspect of the invention, in a cooling mode, when the intake air temperature is cooled down to the selected target temperature; the two-way valves are switched to connect the inlet and the outlet of the low temperature exchange stage with the low temperature coolant loop; and are switched to disconnect the inlet and the outlet of the high temperature exchange stage from the high temperature coolant loop, respectively.

According to an alternative aspect to this cooling mode, the two-way valves are switched to connect the inlet and the outlet of the downstream stage of the water-to-charge air-heat exchanger with the low temperature coolant loop.

According to an aspect of the invention, at least one of the two-way valves is realized by a four-way valve. This configuration provides a more compact valve design switchable by a single actuator and enabling a space saving advantage.

According to an aspect of the invention, the at least one environmental or powertrain parameter of the vehicle is selected from: an ambient temperature, a gas temperature of the intake manifold, an exhaust gas temperature upstream to an exhaust gas aftertreatment device arranged in an exhaust line of the internal combustion engine, a parameter indicating a selective catalytic reduction status and/or a parameter indicating an engine operation condition. By choosing a dependency of the system control from different parameters, in return, the operation stability and flexibility is improved.

According to an aspect of the invention, the control device selects, as the target temperature for the charge air, between one of two predetermined target temperature levels. For example, the system control can temporarily pursue a controlling function for a high target temperature or a low target temperature that supports a thermal precondition of a catalytic task or a regeneration task of an exhaust gas aftertreatment device.

The above and other objects, features and advantages of the present disclosure will become more apparent from the following detailed description made with reference to the accompanying drawings.

In the drawings:
- Fig. 1: is a block diagram of auxiliary components of the engine periphery, in between which the system according to the invention is integrated;
- Fig. 2: is a diagram visualizing a heating mode and a cooling mode beside different temperature ranges;
- Fig. 3: is a block diagram of a system according to a partial aspect of the disclosure including one exchange stage and two three-way valves;
- Fig. 4: is a modification of the system according to a partial aspect of the disclosure including four two-way valves;
- Fig. 5: is a block diagram of a first embodiment of the system according to the invention including a high temperature exchange stage upstream to a low temperature exchange stage and two three-way valves;
- Fig. 6: is a modification of the first embodiment of the invention including four two-way valves;
- Fig. 7: is a block diagram of a second embodiment of the system according to the invention including a low temperature exchange stage upstream to a high temperature exchange stage and two three-way valves;
- Fig. 8: is a modification of the second embodiment of the invention including four two-way valves;
- Fig. 9: is a diagram visualizing the heating mode and the cooling mode in terms of a charge air pressure and a rotational engine speed; and
- Fig. 10: is an explanatory diagram of a transitional characteristic of the first embodiment of the invention including a common expansion tank connecting both coolant loops.

The present invention will be explained in more detail hereinafter by way of multiple embodiments and modifications thereof with reference to the drawings.

### (Common structure and periphery of all embodiments)

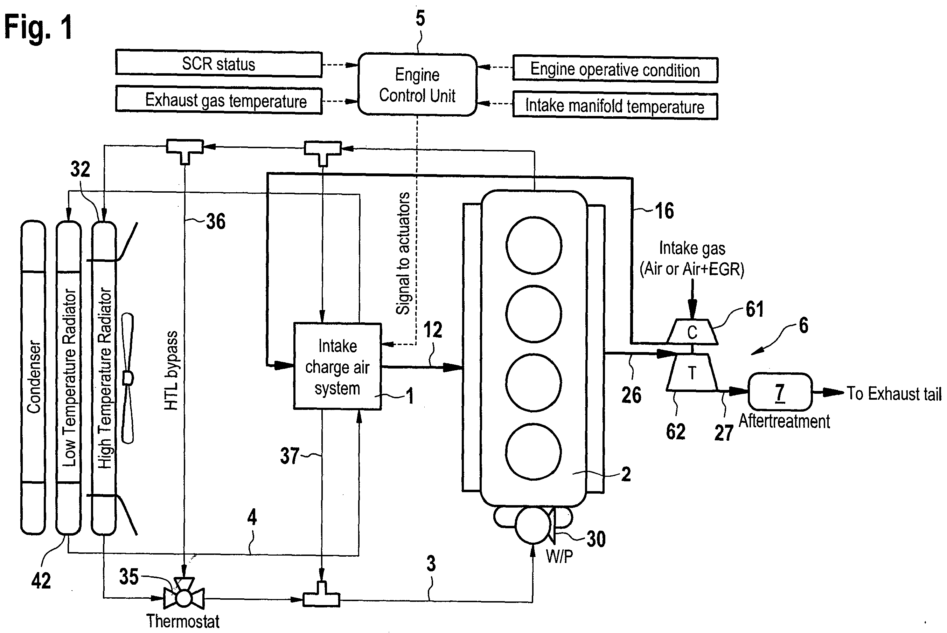

Fig. 1 shows an internal combustion engine 2 and auxiliary components in the engine periphery of a vehicle, in between which the system for controlling a temperature of intake air is integrated. The auxiliary components include a charge air duct 16 that guides charge air that is a compressed fresh intake air, or a compressed variable mixture of intake air and recirculated exhaust gas which is suctioned and discharged by an impeller 61 of a turbo charger 6 directed to a water-to-charge air heat exchanger 1. A connecting air duct 12 is formed by a known intake manifold which feds the compressed charge air coming from the water-to-charge air heat exchanger 1 into combustion chambers in a cylinder block of the internal combustion engine 2. The exhaust gas produced by the combustion operation is guided by an exhaust line section 26 from the combustion chambers to a turbine 62 of the turbo charger 6 to drive the impeller 61. A downstream exhaust line section 27 guides the exhaust gas from the turbine 62 to an arrangement of exhaust aftertreatment devices 7, before the exhaust gas is released from an exhaust tail.

In parallel to the water-to-charge air heat exchanger 1, a known heat exchanger bypass (not shown) is connected between the charge air duct 16 and the connecting air duct 12. A heat exchanger bypass is opened to bypass the water-to-charge air heat exchanger 1, if a charge air temperature upstream to the water-to-charge air heat exchanger 1 sufficiently matches a target intake temperature of charge air, so that an applied temperature change is temporarily not required. However, a charge air flow is not necessarily binary guided either through the water-to-charge air heat exchanger 1 or through the heat exchanger bypass, but can be distributed in a variable share of volume flows on both paths.

The engine 2 is a water-cooled gasoline or diesel engine that is connected to a high temperature coolant loop 4. The high temperature coolant loop 3 is driven by a water pump 30 and circulates a coolant of a high temperature, e.g. 90 to 110 °C between coolant ducts formed within the engine block and a high temperature radiator 32 which exchanges heat to the ambient air. The high temperature coolant loop 3 is operated in terms of a conventional coolant circuit of an internal combustion engine, i.e. in order to transfer heat generated in the combustion chambers to the environment in avoidance of destructive hot spots within the engine block, e.g. the cylinder walls and cylinder head. In the depicted example of Fig. 1, the water pump 30 is arranged to the engine block and can be mechanically driven by a rotational output of the engine 2 or independently driven by an electric motor.

The high temperature coolant loop 3 also comprises a thermostat 35 and a bypass 36 enabling a cold coolant to bypass the high temperature radiator 32 during a cold engine start period in which the coolant is not to be cooled until reaching a predetermined temperature of e.g. 80 to 90 °C, as preset by the thermostat 35. The conventional arrangement of the thermostat 35 and the bypass 36 in parallel to the high temperature radiator 32 is installed in purpose of a rapid warm-up of the engine 2 in a known manner. In addition, the high temperature coolant loop 3 includes an interconnection 37 that connects an upstream section of the high temperature coolant loop 3 to an inlet of an exchange stage of the water-to-charge air heat exchanger 1, and to connect an outlet of said exchange stage to a downstream section of the high temperature coolant loop 3, so as to encompass the water-to-charge air heat exchanger 1 into the high temperature coolant loop 3 depending on a switching state of the system, as described later.

The auxiliary periphery of the engine 2 also includes a low temperature coolant loop 4 that circulates a coolant of a low temperature, e.g. 40 to 70 °C, between an exchange stage of the water-to-charge air heat exchanger 1 and a low temperature radiator 42 which exchanges heat to the ambient air. More particularly, an upstream section of the low temperature coolant loop 4 connects an outlet of the low temperature radiator 42 to an inlet of an exchange stage of the water-to-charge air heat exchanger 1, and an upstream section of the low temperature radiator 42 connects an outlet of said water-to-charge air heat exchanger 1 to an inlet of the low temperature radiator 42, so as to encompass the water-to-charge air heat exchanger 1 into the low temperature coolant loop 4 depending on a switching state of the system, as described later.

The low temperature coolant loop 4 can be combined with the circuit of the high temperature coolant loop 3, in a configuration where, downstream from the high temperature radiator 32, the low temperature coolant loop 4 forms a branched-off path running in parallel to the high temperature coolant loop 3 and re-converges upstream to the water pump 30.

In another configuration, the low temperature coolant loop 4 and the high temperature coolant loop 3 can be separately driven circuits, wherein the low temperature coolant loop 4 is driven by an electric pump 40 (not shown) which can be mechanically driven, or preferably electrically driven. The volume flow to be driven by the electric version of the pump 40 can be controlled in magnitude of a provided electric power supply by means of a control device 5.

The piping of the coolant loops and the supply and return lines encompassing the valves can be of any kind of pipes, tubing, flexible tubes, hoses, or the like that ensure a conduit for a fluid connection.

The control device 5 of the system for controlling an intake temperature of charge air T_{g2} is realized by of a known micro controller that implements a control logic to operate switching means realized by electrically actuated valves arranged in the piping of the coolant loops, as described later, and if applicable, the electric pump 40. For this purpose the control device 5 is electrically connected to the valves and optionally to the pump 40.

The control device 5 is also electrically connected to different sensors in order to process the control logic based on signal input obtained by the sensors. The sensor signals are indicative for an engine operative condition, as e.g. the rotational engine speed, an engine torque or a fuel injection amount, as well as for conditions of the engine periphery, as e.g. a charged temperature T_{g1} of the charge air downstream the turbo charger 6, the intake temperature T_{g2} of the charge air downstream the water-to-charge air heat exchanger 1 to be controlled by the system, an exhaust gas temperature upstream the exhaust aftertreatment devices 7, a status of a selective catalytic reduction, or the like.

### (Control function and modes of the embodiments)

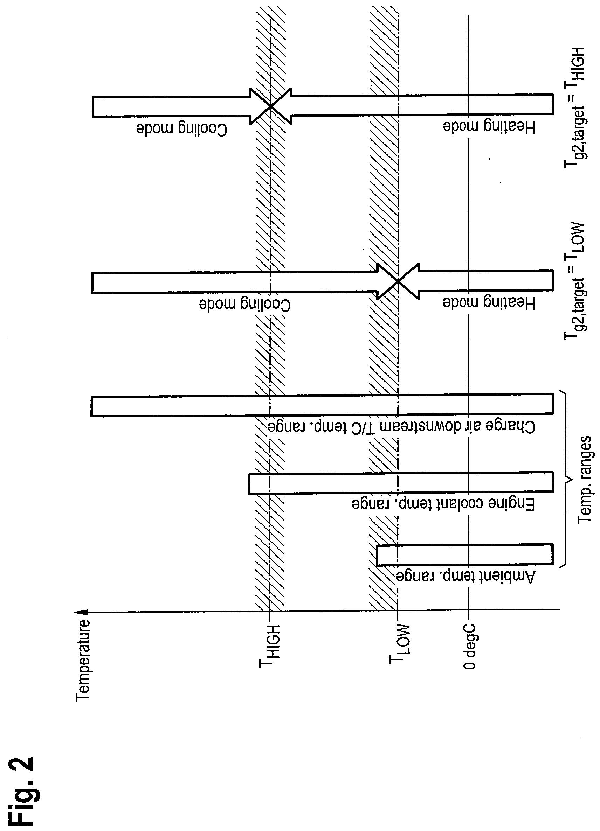

Fig. 2 indicates a scale of the temperature of different media involved with the system for controlling an intake temperature of charge air. The control function of the control device 5 is based on a comparison of different detected temperatures and the execution of operation modes in a coolant supply from the coolant loops to the water-to-charge air heat exchanger 1, so as to regulate an intake temperature of the charge air T_{g2} before introduction into the combustion chambers, for matching a target temperature T_{g2, target} of charge air which ensures an optimization in one or more purposes of combustion conditions, fuel consumption and/or exhaust emissions. More specific, after determination of the target temperature T_{g2 target}, the control device 5 determines whether to execute a heating mode or a cooling mode, in comparison of the actual intake temperature of the charge air T_{g2} and the target temperature T_{g2 target}, and under consideration of the current temperature T_{g1} of the charge air downstream the turbo charger 6 and the available coolant temperature T_{cool} of the high temperature coolant loop 4.

The target temperature T_{g2 target} can preferably be selected from a set of predetermined target temperatures. For example, the target temperature T_{g2 target} is selected from a low target temperature T_{Low} preset within a range 20 °C and 50°C, and a high target temperature T_{High} preset within a range of 50°C and 110°C, in accordance with different control objectives and to the environmental operating conditions. The control objective can be selected under consideration of environmental influences, e.g. summer and winter term ambient temperatures, of exhaust aftertreatment conditions, e.g. the status of a selective reduction catalyst, or the like.

### (Example according to a partial aspect of the disclosure)

The water-to-charge air heat exchanger 1 of system for controlling an intake temperature includes an air channel 10 and an exchange stage 11 accommodated in a housing of the water-to-charge air heat exchanger 1. The air channel 10 uptakes the charge air discharged from the turbo charger 6 through the charge air duct 16, guides the charge air through the housing while crossing the exchange stage 11, and introduces the charge air into the connecting duct 12, i.e. into an intake manifold of the engine 2. The exchange stage 11 is arranged in the cross-section of the air channel 10 for exchanging heat between the charge air passing through and a coolant flow circulating in the exchange stage 11.

The exchange stage 11 is a device that transfers thermal energy between two parts of the system. The exchange stage 11 has an inlet and an outlet, as well as flow channels in between for guiding one coolant, or a mixture of both coolants, as currently supplied from the high temperature coolant loop 4 and the low temperature coolant loop 3 through the exchange stage 11. The exchange stage 11 has the shape of a characteristic radiator body providing an extensively increased surface to volume ratio for heat exchange, wherein coolant flow channels run inside the radiator body. The radiator body of the exchange stage 11 has opened cross-sections formed therein allowing the charge air in the air channel 10 to cross the radiator body while passing along the heat exchanging surface.

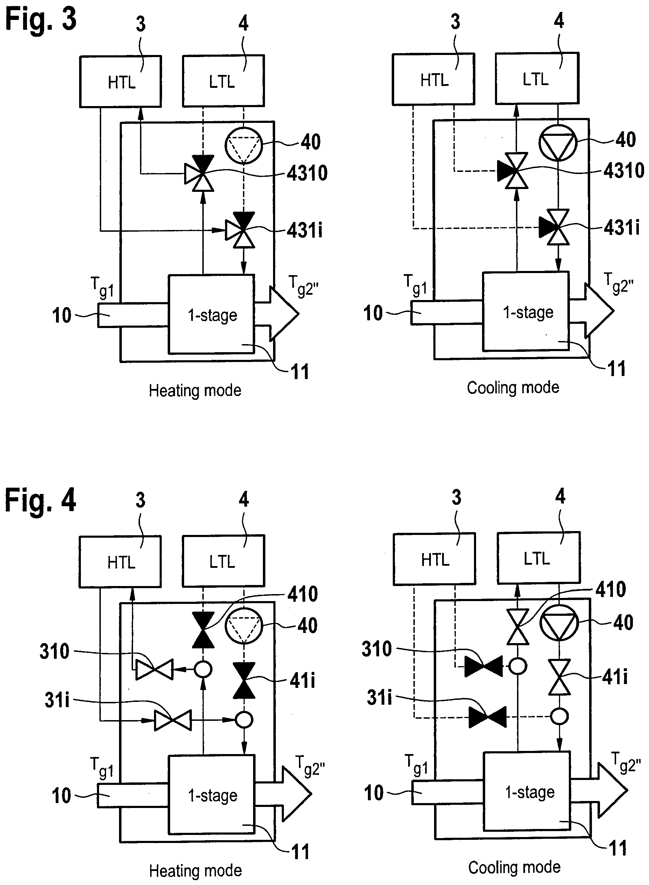

As shown in Fig. 3, the system for controlling an intake temperature further includes piping for connecting the coolant loops to the exchange stage 11 and switching means realized by valves to open and close the fluid connections of piping. The valves are preferably electrically actuated, e.g. electromagnetic proportional valves, that allow for gradual opening positions for a variable opening cross-sections resulting in a controllable magnitude of a volume flow passing through the valve. Likewise, the magnitude of volume flow driven by the optional electric pump 40 can be gradually controlled between a shut off and a maximum of power.

The piping includes a supply line and a return line connecting the low temperature coolant loop 4 and the exchange stage 11. The supply line encompasses the electric pump 40 and a three-way valve 431i. The three-way valve 431i establishes a switchable connection between a supply from the low temperature coolant loop 4, a supply from the high temperature coolant loop 3 and the inlet of the exchange stage 11. The return line encompasses a three-way valve 431o. The three-way valve 431o establishes a switchable connection between a return to the low temperature coolant loop 4, a return to the high temperature coolant loop 3 and the outlet of the exchange stage 11.

If the control device 5 executes a maximum heating mode, the electric pump 40 does substantially not drive the low temperature loop 4, the three-way valve 431i closes the supply from the low temperature coolant loop 4, opens the supply from the high temperature coolant loop 3 and opens to the inlet of the exchange stage 11. Meanwhile, the three-way valve 431o closes the return to the low temperature coolant loop 4, opens the return to the high temperature coolant loop 3 and opens to the outlet of the exchange stage 11.

In this setting, the exchange stage 11 is circulated with coolant of the high temperature coolant loop 3 to provide a maximum heating by a transfer from the coolant to the charge air passing the exchange stage 11 in the air channel 10 of the water-to-charge air heat exchanger 1.

If the control device 5 executes a maximum cooling mode, the electric pump 40 drives the low temperature coolant loop 4, the three-way valve 431i opens the supply from the low temperature coolant loop 4, closes the supply from the high temperature coolant loop 3 and opens to the inlet of the exchange stage 11. Meanwhile, the three-way valve 431o opens the return to the low temperature coolant loop 4, closes the return to the high temperature coolant loop 3 and opens to the outlet of the exchange stage 11.

In this setting, the exchange stage 11 is circulated with the coolant of the low temperature coolant loop 4 to provide a maximum cooling by a heat transfer from the charge air to the coolant.

In an alternative example according to a partial aspect of the disclosure, valves 431i and 431o are integrally formed in a body of a six-way valve. This configuration is applicable, since the valves 431i and 431o operate simultaneously and concordantly. The piping of this alternative modification provides particularly the same logical connection paths compared to the piping of the modification of the example according to a partial aspect of the disclosure including the two three-way valves.

### (Modification of the example according to a partial aspect of the disclosure)

As shown in Fig. 4, a modified piping of the system for controlling an intake temperature includes a supply line and a return line connecting the low temperature coolant loop 4 and the exchange stage 11. The supply line encompasses the electric pump 40 and a two-way valve 41i establishing a switchable connection between the supply from the low temperature coolant loop 4 and the inlet of the exchange stage 11. The return line encompasses a two-way valve 41o establishing a switchable connection between the return to the low temperature coolant loop 4 and the outlet of the exchange stage 11.

In addition, the piping includes a supply line and a return line of the high temperature coolant loop 3 connecting the same with junctions of the supply line and the return line of the low temperature coolant loop 4 connected to the exchange stage 11. The supply line encompasses a two-way valve 31i establishing a switchable connection between the supply from the high temperature coolant loop 3 and a supply line junction connected to the inlet of the exchange stage 11. The return line encompasses a two-way valve 31o establishing a switchable connection between the return to the high temperature coolant loop 3 and a return line junction connected the outlet of the exchange stage 11.

If the control device 5 executes the maximum heating mode, the electric pump 40 does substantially not drive the low temperature loop 4, the two-way valve 41i closes the supply from the low temperature coolant loop 4 to the inlet of the exchange stage 11, and the two-way valve 41o closes the return of the low temperature coolant loop 4 from the outlet of the exchange stage 11. Meanwhile, the two-way valve 31i opens the supply from the high temperature coolant loop 3 to the supply line junction connected to the inlet of the exchange stage 11, and the two-way valve 31o opens the return of the high temperature coolant loop 3 to the return line junction connected the outlet of the exchange stage 11.

In this setting of the alternative piping, the exchange stage 11 is circulated with the coolant of the high temperature coolant loop 3 to provide a maximum heating of the charge air.

If the control device 5 executes the maximum cooling mode, the electric pump 40 drives the low temperature loop 4, the two-way valve 41i opens the supply from the low temperature coolant loop 4 to the inlet of the exchange stage 11, and the two-way valve 41o opens the return of the low temperature coolant loop 4 from the outlet of the exchange stage 11. Meanwhile, the two-way valve 31i closes the supply from the high temperature coolant loop 3 to the supply line junction connected to the inlet of the exchange stage 11, and the two-way valve 31o closes the return of the high temperature coolant loop 3 to the return line junction connected the outlet of the exchange stage 11.

In this setting of the alternative piping, the exchange stage 11 is circulated with the coolant of the low temperature coolant loop 4 to provide a maximum cooling of the charge air.

In an alternative modification (not shown) of the example according to a partial aspect of the disclosure, valves 41i and 31i are integrally formed in a body of a four-way valve, as well as valves 41o and 31o are integrally formed in a body of a four-way valve. This configuration is applicable, since the valves 41i and 41o, as well as 31i and 31o operate simultaneously and concordantly. The piping of this alternative modification provides particularly the same logical connection paths compared to the piping of the modification of the example according to a partial aspect of the disclosure including the four two-way valves.

### (First embodiment)

In a first embodiment of the system for controlling an intake temperature, the water-to-charge air heat exchanger 1 accommodates two exchange stages. One exchange stage 13 is associated with the high temperature coolant loop 3 and one exchange stage 14 is associated with the low temperature coolant loop 4, wherein the meaning of associated herein refers to the setup of a conventional two-stage water-cooled charge air cooler equipped with a non-switchable, i.e. discrete piping arrangement.

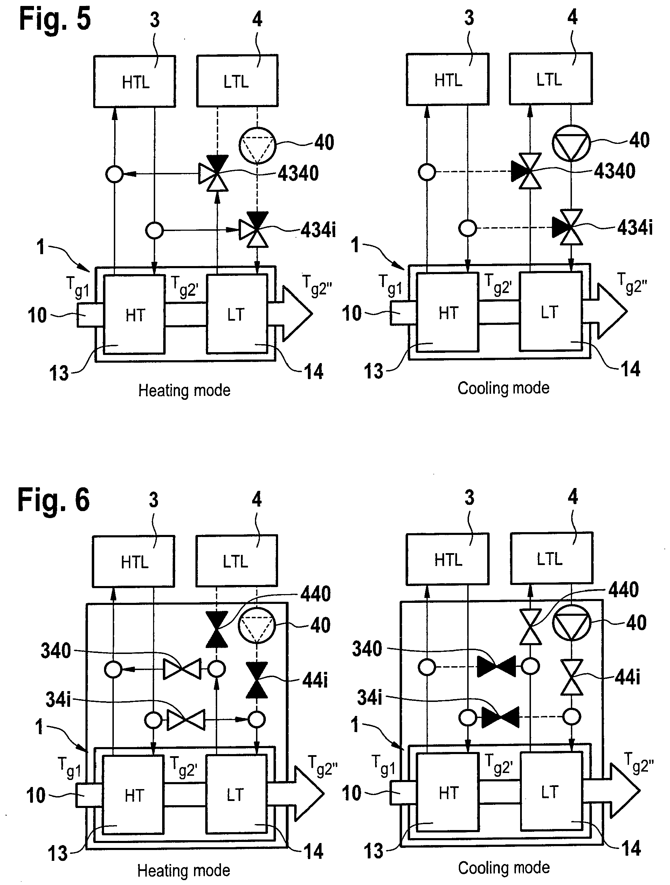

As shown in Fig. 5, in a flow direction of the charge air conducted in the air channel 10, the exchange stage 13 associated with the high temperature coolant loop 3 is arranged upstream and the exchange stage 14 associated with the low temperature coolant loop 4 is arranged downstream within the housing of the water-to-charge air heat exchanger 1.

The piping of the first embodiment includes a supply line and a return line connecting the high temperature coolant loop 3 and the exchange stage 13, as well as a supply line and a return line connecting the low temperature coolant loop 4 and the exchange stage 14. The supply line of the low temperature coolant loop 4 encompasses the electric pump 40 and a three-way valve 434i. The three-way valve 434i establishes a switchable connection between a supply from the low temperature coolant loop 4, a supply line junction connected to the supply line of the high temperature coolant loop 3 and the inlet of the exchange stage 14. The return line encompasses a three-way valve 434o establishing a switchable connection between a return to the low temperature coolant loop 4, a return line junction connected to the return line of the high temperature coolant loop 3 and the outlet of the exchange stage 14.

If the control device 5 executes the maximum heating mode, the electric pump 40 does substantially not drive the low temperature coolant loop 4, the three-way valve 434i closes the supply from the low temperature coolant loop 4, opens the supply line junction connected to the supply line of the high temperature coolant loop 3 and opens to the inlet of the exchange stage 14. Meanwhile, the three-way valve 434o closes the return to the low temperature coolant loop 4, opens the return line junction connected to the return line of the high temperature coolant loop 3 and opens from the outlet of the exchange stage 14.

In this setting, the exchange stage 13 associated with the high temperature coolant loop 3 and the exchange stage 14 associated with the low temperature coolant loop 4 are both circulated with the coolant of the high temperature coolant loop 3 to provide a maximum heating by a heat transfer from the coolant to the charge air.

If the control device 5 executes the maximum cooling mode, the electric pump 40 drives the low temperature coolant loop 4, the three-way valve 434i opens the supply from the low temperature coolant loop 4, closes the supply line junction connected to the supply line of the high temperature coolant loop 3 and opens to the inlet of the exchange stage 14. Meanwhile, the three-way valve 434o opens the return to the low temperature coolant loop 4, closes the return line junction connected to the return line of the high temperature coolant loop 3 and opens from the outlet of the exchange stage 14.

In this setting, the exchange stage 13 associated with the high temperature coolant loop 3 is circulated with the coolant of the high temperature coolant loop 3; and the exchange stage 14 associated with the low temperature coolant loop 4 is circulated with the coolant of the low temperature coolant loop 4 to provide a maximum cooling by a heat transfer from the charge air to the coolant.

In an alternative first embodiment, valves 434i and 434o are integrally formed in a body of a six-way valve, since the valves 434i and 434o operate simultaneously and concordantly, as explained above. The piping of this alternative modification provides particularly the same logical connection paths compared to the piping of the modification of the first embodiment including the two three-way valves.

### (Modification of the first embodiment)

Similar to the modification of the example according to a partial aspect of the disclosure, the piping of the system for controlling an intake temperature according to the first embodiment can be modified so as to comprise four two-way valves, as shown in Fig. 6.

The modified piping includes a supply line and a return line connecting the high temperature coolant loop 3 and the exchange stage 13, as well as a supply line and a return line connecting the low temperature coolant loop 4 and the exchange stage 14.

The supply line of the low temperature coolant loop 4 encompasses the electric pump 40 and a two-way valve 44i establishing a switchable connection between the supply from the low temperature coolant loop 4 and the inlet of the exchange stage 14. The return line of the low temperature coolant loop 4 encompasses a two-way valve 44o establishing a switchable connection between the return to the low temperature coolant loop 4 and the outlet of the exchange stage 14.

Furthermore, the piping comprises a supply interconnection between both of the supply lines and a return interconnection between both of the return lines. The supply interconnection encompasses a two-way valve 34i establishing a switchable connection between the supply line of the high temperature coolant loop 3 and a supply line junction connected to the inlet of the exchange stage 14. The return interconnection encompasses a two-way valve 34o establishing a switchable connection between the return line to the high temperature coolant loop 3 and a return line junction connected to the outlet of the exchange stage 14.

If the control device 5 executes the maximum heating mode, the electric pump 40 does substantially not drive the low temperature loop 4, the two-way valve 44i closes the supply from the low temperature coolant loop 4 to the inlet of the exchange stage 14, and the two-way valve 44o closes the return of the low temperature coolant loop 4 from the outlet of the exchange stage 14. Meanwhile, the two-way valve 34i opens the supply interconnection between the supply line of the high temperature coolant loop 3 and the supply line junction connected to the inlet of the exchange stage 14, and the two-way valve 34o opens the return interconnection between the return line of the high temperature coolant loop 3 and the return line junction connected the outlet of the exchange stage 14.

In this setting of the alternative piping, both of the exchange stages 13, 14 are circulated with the coolant of the high temperature coolant loop 3 to provide a maximum heating of the charge air.

If the control device 5 executes the maximum cooling mode, the electric pump 40 drives the low temperature loop 4, the two-way valve 44i opens the supply of the low temperature coolant loop 4 to the inlet of the exchange stage 14, and the two-way valve 44o opens the return of the low temperature coolant loop 4 from the outlet of the exchange stage 14. Meanwhile, the two-way valve 34i closes the supply interconnection between the supply line of the high temperature coolant loop 3 and the supply line junction connected to the inlet of the exchange stage 14, and the two-way valve 34o closes the return interconnection between the return line of the high temperature coolant loop 3 and the return line junction connected the outlet of the exchange stage 14.

In this setting of the alternative piping, the exchange stage 13 is circulated with the coolant of the high temperature coolant loop 3; and the exchange stage 14 is circulated with the coolant of the low temperature coolant loop 4 to provide a maximum cooling of the charge air.

In an alternative modification (not shown) of the first embodiment, valves 44i and 34i are integrally formed in a body of a four-way valve, as well as valves 44o and 34o are integrally formed in a body of a four-way valve, since the valves 44i and 44o, as well as 34i and 34o operate simultaneously and concordantly, as explained above. The piping of this alternative modification provides particularly the same logical connection paths compared to the piping of the modification of the first embodiment including the four two-way valves.

### (Second embodiment)

A second embodiment of the system for controlling an intake temperature corresponds substantially to the first embodiment, except for the difference of an alternated arrangement of the exchange stages 13, 14 in the water-to-charge air heat exchanger 1.

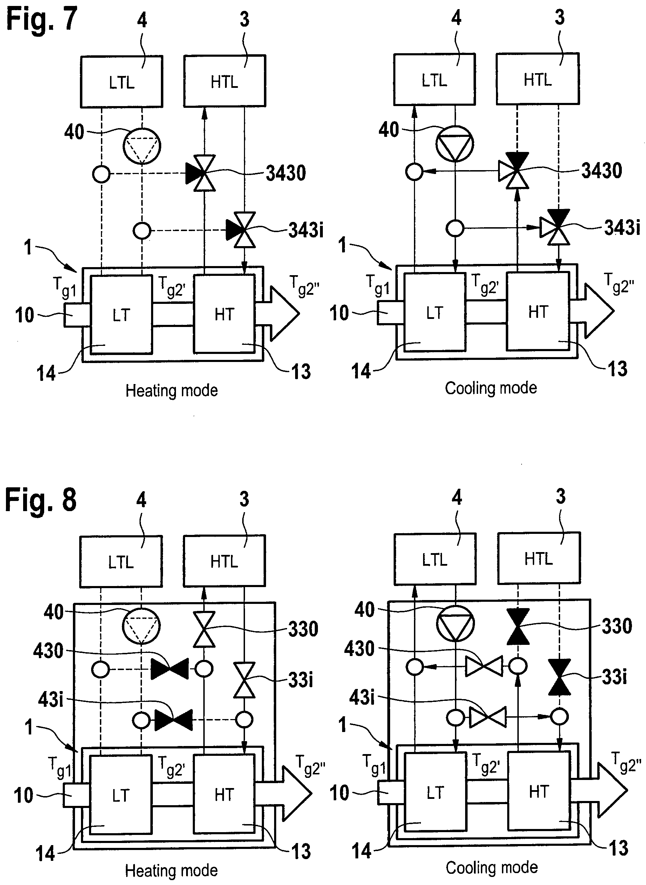

As shown in Fig. 7, in the water-to-charge air heat exchanger 1 of the second embodiment, the exchange stage 14 associated with the low temperature coolant loop 4 is accommodated upstream and the exchange stage 13 associated with the high temperature coolant loop 3 is accommodated downstream in the flow direction of the charge air conducted in the air channel 10.

The piping of the second embodiment includes a supply line and a return line connecting the low temperature coolant loop 4 and the exchange stage 14, as well as a supply line and a return line connecting the high temperature coolant loop 3 and the exchange stage 13. The supply line of the low temperature coolant loop 4 encompasses the electric pump 40. The supply line of the high temperature coolant loop 3 encompasses a three-way valve 343i establishing a switchable connection between a supply from the high temperature coolant loop 3, a supply line junction connected to the supply line of the low temperature coolant loop 4 and the inlet of the exchange stage 13. The return line of the high temperature coolant loop 3 encompasses a three-way valve 343o establishing a switchable connection between a return to the high temperature coolant loop 3, a return line junction connected to the return line of the low temperature coolant loop 4 and the outlet of the exchange stage 13.

If the control device 5 executes a heating mode, the three-way valve 343i opens the supply from the high temperature coolant loop 3, closes the supply line junction connected to the supply line of the low temperature coolant loop 4 and opens to the inlet of the exchange stage 13. Meanwhile, the electric pump 40 does substantially not drive the low temperature coolant loop 4, the three-way valve 343o opens the return to the high temperature coolant loop 3, closes the return line junction connected to the return line of the low temperature coolant loop 4 and opens to the outlet of the exchange stage 13.

In this setting of the alternated exchange stage arrangement, only the exchange stage 13 is circulated with the coolant of the high temperature coolant loop 3 providing heating by a heat transfer from the coolant to the charge air at the exchange stage 13, while the exchange stage 14 is substantially not circulated with coolant.

If the control device 5 executes a cooling mode, the three-way valve 343i closes the supply from the high temperature coolant loop 3, opens the supply line junction connected to the supply line of the low temperature coolant loop 4 and opens to the inlet of the exchange stage 13. Meanwhile, the electric pump 40 drives the low temperature coolant loop 4, the three-way valve 343o closes the return to the high temperature coolant loop 3, opens the return line junction connected to the return line of the low temperature coolant loop 4 and opens to the outlet of the exchange stage 13.

In this setting of the alternated exchange stage arrangement, both of the exchange stages 13 and 14 are circulated with the coolant of the low temperature coolant loop 4 providing cooling by a heat transfer from the charge air to the coolant at the exchange stages 13 and 14.

In an alternative second embodiment, valves 343i and 343o are integrally formed in a body of a six-way valve, since the valves 343i and 343o operate simultaneously and concordantly, as explained above. The piping of this alternative modification provides particularly the same logical connection paths compared to the piping of the modification of the first embodiment including the two three-way valves.

### (Modification of the second embodiment)

Similar to the modification of the first embodiment, the piping of the system for controlling an intake temperature according to the second embodiment can modified so as to comprise four two-way valves, as shown in Fig. 8.

The modified piping includes a supply line and a return line connecting the low temperature coolant loop 4 and the exchange stage 14, as well as a supply line and a return line connecting the high temperature coolant loop 3 and the exchange stage 13. The supply line of the low temperature coolant loop 4 encompasses the electric pump 40. The supply line of the high temperature coolant loop 3 encompasses a two-way valve 33i establishing a switchable connection between the supply from the high temperature coolant loop 3 and the inlet of the exchange stage 13. The return line of the high temperature coolant loop 3 encompasses a two-way valve 33o establishing a switchable connection between the return to the high temperature coolant loop 3 and the outlet of the exchange stage 13.

Furthermore, the piping comprises a supply interconnection between both of the supply lines and a return interconnection between both of the return lines. The supply interconnection encompasses a two-way valve 43i establishing a switchable connection between the supply line of the low temperature coolant loop 4 and a supply line junction connected to the inlet of the exchange stage 13. The return interconnection encompasses a two-way valve 43o establishing a switchable connection between the return line to the low temperature coolant loop 4 and a return line junction connected the outlet of the exchange stage 13.

If the control device 5 executes the heating mode, the two-way valve 33i opens the supply from the high temperature coolant loop 3 to the inlet of the exchange stage 13, and the two-way valve 33o opens the return of the high temperature coolant loop 3 from the outlet of the exchange stage 13. Meanwhile, the electric pump 40 does substantially not drive the low temperature loop 4, the two-way valve 43i closes the supply interconnection between the supply line of the low temperature coolant loop 4 and the supply line junction connected to the inlet of the exchange stage 13, and the two-way valve 43o closes the return interconnection between the return line of the low temperature coolant loop 4 and the return line junction connected the outlet of the exchange stage 13.

In this setting of the alternative piping of the alternated exchange stage arrangement, only the exchange stage 13 is circulated with the coolant of the high temperature coolant loop 3 providing heating by a heat transfer from the coolant to the charge air at the exchange stage 13, while the exchange stage 14 is substantially not circulated with coolant.

If the control device 5 executes the cooling mode, the two-way valve 33i closes the supply of the high temperature coolant loop 3 to the inlet of the exchange stage 13, and the two-way valve 33o closes the return of the high temperature coolant loop 3 from the outlet of the exchange stage 13. Meanwhile, the electric pump 40 drives the low temperature loop 4, the two-way valve 43i opens the supply interconnection between the supply line of the low temperature coolant loop 4 and the supply line junction connected to the inlet of the exchange stage 13, and the two-way valve 43o opens the return interconnection between the return line of the low temperature coolant loop 4 and the return line junction connected the outlet of the exchange stage 13.

In this setting of the alternative piping of the alternated exchange stage arrangement, both of the exchange stages 13 and 14 are circulated with the coolant of the low temperature coolant loop 4 providing cooling by a heat transfer from the charge air to the coolant at the exchange stages 13 and 14.

In an alternative modification (not shown) of the second embodiment, valves 33i and 43i are integrally formed in a body of a four-way valve, as well as valves 33o and 43o are integrally formed in a body of a four-way valve, since the valves 33i and 43o, as well as 33i and 43o operate simultaneously and concordantly, as explained above. The piping of this alternative modification provides particularly the same logical connection paths compared to the piping of the modification of the second embodiment including the four two-way valves.

### (Transitional characteristics)

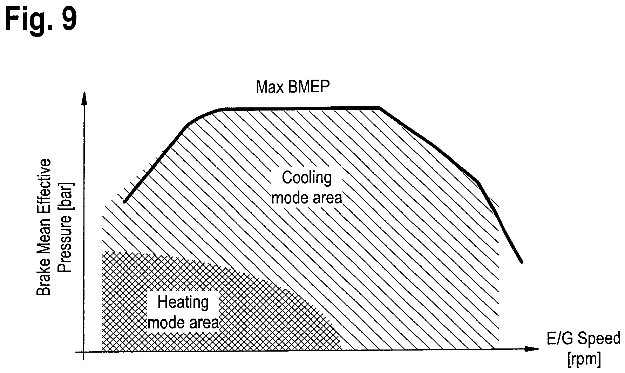

Fig. 9 illustrates operation ranges for the execution of heating modes and cooling modes with respect to the rotational engine speed and the brake mean effective pressure (BMEP) that corresponds to a torque level and an efficiency of the engine 2. As derivable from the area located in the lower left corner of the diagram, the heating modes are applicable at low rotational engine speed and a resulting low charge pressure, as for example in driving conditions under urban speed limits or continuous traffic velocity.

It is noted that between the indicative mode areas in the diagram, a smooth shift rather than a sharp border is to be considered, reflecting the functionality of gradual intermediate intensities between a maximum heating mode and a maximum cooling mode, which is achieved by the variability of gradual flow rates set by valve opening positions, a pump driving power and/or a bypass opening in parallel to the water-to-charge air heat exchanger 1, as set forth above.

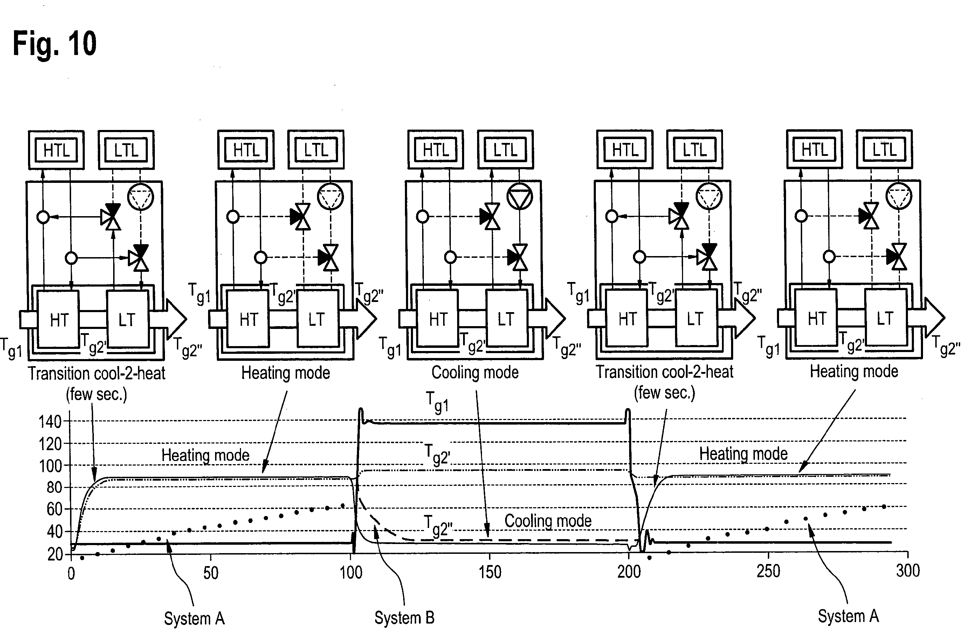

Fig. 10 shows a diagram setting out time curves of temperatures of the charge air measured upstream to the water-to-charge air heat exchanger 1 (T_{g1}), in between the exchange stages (T_{g2'}) and downstream to the water-to-charge air heat exchanger 1 (T_{g2"}) during transitional phases changing from a heating mode to a cooling mode and vice versa again in a period of 100 seconds each.

In particular, the diagram depicts the temperature measurements of a setup of the exchange stage arrangement of the first embodiment that exhibits a preferred characteristic during transitional phases, in comparison to a corresponding controlling conducted on a prior art thermal system, substantially consisting of a conventional two-stage water-cooled charge air cooler having one exchange stage separately connected to a high temperature loop and one exchange stage separately connected to a low temperature coolant loop by non-switchable fixed piping connections.

The dotted curve denotes the characteristic of a non-switchable thermal system A, accommodating an exchange stage fixedly connected to a high temperature loop upstream and an exchange stage fixedly connected to a low temperature loop downstream in the flow direction of charge air. As found out by the Inventors, during a shift from a cooling mode to a heating mode, said thermal system A shows an undesirable slow temperature rise due to thermal inertia of remaining low temperature coolant in the downstream exchange stage, resulting in a temporally ineffective heating of charge air.

The dashed curve denotes another non-switchable thermal system B, accommodating an exchange stage fixedly connected to a low temperature loop upstream and an exchange stage fixedly connected to a high temperature loop downstream in the flow direction of charge air. As found out by the Inventors, during a shift from a heating mode to a cooling mode, said thermal system B shows an undesirable delay in temperature falling caused by thermal inertia of remaining high temperature coolant in the downstream exchange stage, resulting in a temporally ineffective cooling of charge air.

The solid line denotes the setup of an exemplary system of the invention according to the first embodiment, i.e. the arrangement of the exchange stage 13 associated with the high temperature coolant loop 3 arranged upstream and the exchange stage 14 associated with the low temperature coolant loop 4 arranged downstream in the direction of the charge air flow, and connected by a piping having two switchable three-way valves as described above.

During controlling of this system according to the invention between modes, the transitional characteristic exhibited a significantly enhanced responsiveness towards both, a quick temperature rise, when shifting from a cooling mode to a heating mode, as well as a substantial elimination of delay of temperature fall, when shifting from a heating mode to a cooling mode.

The improved responsiveness of the adaption of intake temperature of charge air (T_{g2"}) to the controlled modes, enables the desired advantages with respect to combustion efficiency, lower emissions and exploitation for exhaust aftertreatment purposes, as named above.

An experimentally applied control function resulting in the shown improvement of transitional characteristic was also adapted to perform a mixing of the flow rates of coolants supplied from both of the coolant loops. The functionality of mixing the coolant flow rates was performed under provision of a common expansion tank (not shown) connected between both of the coolant loops for buffering pressure and volume fluctuations occurring during the transition phases.

## Claims

1. A system for controlling an intake temperature (T_{g2}) of a charge air, which is fed into an internal combustion engine (2) of a vehicle, wherein the system comprises:
a water-to-charge air heat exchanger (1), which is switchable connected to a high temperature coolant loop (3) and/or to a low temperature coolant loop (4) to exchange heat, and
a charge air duct (16) operatively connected to the water-to-charge air heat exchanger (1); wherein
the water-to-charge air heat exchanger (1) comprises a high temperature exchange stage (13) and a low temperature exchange stage (14) for exchanging heat between a coolant and the air conducted through the charge air duct (16), respectively;
the low temperature exchange stage (14) having an inlet and an outlet connected to the low temperature coolant loop (4) by a supply line and a return line;
the high temperature exchange stage (13) having an inlet and an outlet connected to the high temperature coolant loop (3) by a supply line and a return line; and
the inlet and the outlet of one of the low temperature exchange stage (14) and the high temperature exchange stage (13) are switchable connected to the corresponding one of the low temperature coolant loop (4) and the high temperature coolant loop (3), and are switchable connected to the supply line and the return line of the other one of the low temperature exchange stage (14) and the high temperature exchange stage (13) via a three-way valve (434i, 343i; 434o, 343o), respectively;
a pump (40) driving the low temperature coolant loop (4) that is arranged upstream to the respective three-way valve (434i, 343i) by which the inlet of the low temperature exchange stage (14) is switchable connected to the low temperature coolant loop (4) and
to the supply line of the high temperature exchange stage (13);
a connecting air duct (12) that connects the water-to-charge air heat exchanger (1) to the internal combustion engine (2);
detecting means for detecting the intake temperature (T_{g2}) of charge air in the connecting air duct (12) or downstream of the water-to-charge air heat exchanger (1);
detecting means for at least one environmental or powertrain parameter of the vehicle; and
a control device (5) that is coupled to the detecting means for the intake temperature (T_{g2}) of charge air and that is coupled to the detecting means for the at least one environmental or powertrain parameter of the vehicle; wherein
the control device (5) is configured to select a target temperature for the intake temperature of the charge air that is fed into the internal combustion engine (2) according to the detected at least one environmental or powertrain parameter; and wherein
the coolant loops (3, 4) are suitable to be switched to be connected or disconnected with the water-to-charge air heat exchanger (1) such that the intake temperature (T_{g2}) of charge air is heated up or cooled down to the selected target temperature.

2. A system according to claim 1, wherein
the control device (5) is coupled to the pump (40) driving the low temperature coolant loop (4); and configured such that in a heating mode, when the charge air is to be heated up to the selected target temperature, the driving power of the pump (40) is switched off; or in a cooling mode, when the charge air is to be cooled down to the selected target temperature, the driving power of the pump (40) is switched on and controlled in a volume flow.

3. A system according to claim 1 or 2, wherein, in a heating mode, when the charge air is to be heated up to the selected target temperature; the three-way valves (434i, 434o; 343i, 343o) are configured to be switched to connect the inlet and the outlet of the high temperature exchange stage (13) with the high temperature coolant loop (3); and to disconnect the inlet and the outlet of the low temperature exchange stage (14) from the low temperature coolant loop (4).

4. A system according to one of claims 1 to 3, wherein, in a cooling mode, when the charge air is to be cooled down to the selected target temperature; the three-way valves (434i, 434o; 343i, 343o) are configured to be switched to connect the inlet and the outlet of the low temperature exchange stage (14) with the low temperature coolant loop (4); and to disconnect the inlet and the outlet of the high temperature exchange stage (13) from the high temperature coolant loop (3), respectively.

5. A system according to one of claims 1 to 4, wherein
the three-way valve (431i; 434i; 343i) and the three-way valve (431o; 434; 343o) are realized by a six-way valve.

6. A system for controlling an intake temperature (T_{g2}) of a charge air, which is fed into an internal combustion engine (2) of a vehicle, wherein the system comprises:
a water-to-charge air heat exchanger (1), which is switchable connected to a high temperature coolant loop (3) and/or to a low temperature coolant loop (4) to exchange heat, and
a charge air duct (16) operatively connected to the water-to-charge air heat exchanger (1); wherein
the water-to-charge air heat exchanger (1) comprises a high temperature exchange stage (13) and a low temperature exchange stage (14) for exchanging heat between a coolant and the air conducted through the charge air duct (16), respectively;
the low temperature exchange stage (14) having an inlet and an outlet connected to the low temperature coolant loop (4) by a low temperature supply line and a low temperature return line;
the high temperature exchange stage (13) having an inlet and an outlet connected to the high temperature coolant loop (3) by a high temperature supply line and a high temperature return line;
the inlet and the outlet of one of the low temperature exchange stage (14) and high temperature exchange stage (13) are switchable connected to the corresponding one of the low temperature coolant loop (4) and the high temperature coolant loop (3) via a two-way valve (44i, 44o; 33i, 33o); and
the same inlet and the outlet are switchable connected to the supply line and the return line of the other one of the low temperature coolant loop (4) and the high temperature coolant loop (3) via a two-way valve (34i, 34o; 43i, 43o) in an interconnection arranged between the supply lines and between the return lines, respectively;
a pump (40) driving the low temperature coolant loop (4) that is arranged upstream to the respective two-way valves (44i, 34i, 43i) by which the inlet of the low temperature exchange stage (14) is switchable connected to the low temperature coolant loop (4) or to the supply line of the high temperature exchange stage (13);
a connecting air duct (12) that connects the water-to-charge air heat exchanger (1) to the internal combustion engine (2);
detecting means for detecting the intake temperature (T_{g2}) of charge air in the connecting air duct (12) or downstream of the water-to-charge air heat exchanger (1);
detecting means for at least one environmental or powertrain parameter of the vehicle; and
a control device (5) that is coupled to the detecting means for the intake temperature (T_{g2}) of charge air and that is coupled to the detecting means for the at least one environmental or powertrain parameter of the vehicle; wherein
the control device (5) is configured to select a target temperature for the intake temperature of the charge air that is fed into the internal combustion engine (2) according to the detected at least one environmental or powertrain parameter; and wherein
the coolant loops (3, 4) are suitable to be switched to be connected or disconnected with the water-to-charge air heat exchanger (1) such that the intake temperature (T_{g2}) of charge air is heated up or cooled down to the selected target temperature.

7. A system according to claim 6, wherein
the control device (5) is coupled to the pump (40) driving the low temperature coolant loop (4); and configured such that in a heating mode, when the charge air is to be heated up to the selected target temperature, the driving power of the pump (40) is switched off; or in a cooling mode, when the charge air is to be cooled down to the selected target temperature, the driving power of the pump (40) is switched on and controlled in a volume flow.

8. A system according to claim 6 or 7, wherein, in a heating mode, when the charge air is to be heated up to the selected target temperature; the two-way valves (34i, 34o, 44i, 44o; 43i, 43o, 33i, 33o) are configured to be switched to connect the inlet and the outlet of the high temperature exchange stage (13) with the high temperature coolant loop (3); and to disconnect the inlet and the outlet of the low temperature exchange stage (14) from the low temperature coolant loop (4).

9. A system according to one of claims 6 to 8, wherein, in a cooling mode, when the charge air is to be cooled down to the selected target temperature; the two-way valves (34i, 34o, 44i, 44o; 43i, 43o, 33i, 33o) are configured to be switched to connect the inlet and the outlet of the low temperature exchange stage (14) with the low temperature coolant loop (4); and to disconnect the inlet and the outlet of the high temperature exchange stage (13) from the high temperature coolant loop (3), respectively.

10. A system according to one of claims 6 to 9, wherein
two of the two-way valves (34i, 34o, 43i, 43o) are realized by a four-way valve; and
two of the two-way valves (44i, 44o, 33i, 33o) are realized by a four-way valve.

11. A system according to one of the preceding claims, wherein the at least one environmental or powertrain parameter of the vehicle (7) is selected from:
an ambient temperature, a gas temperature of the intake manifold, an exhaust gas temperature upstream to an exhaust gas aftertreatment device arranged in an exhaust line of the internal combustion engine (2), a parameter indicating a selective catalytic reduction status and/or a parameter indicating an engine operation condition.

12. A System according to one of the preceding claims, wherein the control device (5) is suitable to select, as the target temperature for the intake temperature of the charge air, between one of two predetermined target temperature levels (T_{Low/High}).

## Patentansprüche

1. System zum Steuern einer Ansaugtemperatur (T_{g2}) einer Ladeluft, die einer Verbrennungskraftmaschine (2) eines Fahrzeugs zugeführt wird, wobei das System aufweist:
einen Wasserladungsluftwärmetauscher (1), der schaltbar mit einem Hochtemperaturkühlmittelkreis (3) und/oder mit einem Niedrigtemperaturkühlmittelkreis (4) verbunden ist, um Wärme zu tauschen, und einen Ladeluftkanal (16), der mit dem Wasserladungsluftwärmetauscher (1) operativ verbunden ist; wobei
der Wasserladungsluftwärmetauscher (1) eine Hochtemperaturtauschstufe (13) und eine Niedrigtemperaturtauschstufe (14) zum Tauschen von Wärme zwischen einem Kühlmittel und der Luft, die durch den Ladeluftkanal (16) geführt wird, aufweist;
wobei die Niedrigtemperaturtauschstufe (14) einen Einlass und einen Auslass aufweist, die mit dem Niedrigtemperaturkühlmittelkreis (4) durch eine Zuführleitung und eine Rückführleitung verbunden sind;
wobei die Hochtemperaturtauschstufe (13) einen Einlass und einen Auslass aufweist, die mit dem Hochtemperaturkühlmittelkreis (3) durch eine Zuführleitung und eine Rückführleitung verbunden sind; und
wobei der Einlass und der Auslass von der Niedrigtemperaturtauschstufe (14) oder der Hochtemperaturtauschstufe (13) schaltbar mit dem entsprechenden von dem Niedrigtemperaturkühlmittelkreis (4) und dem Hochtemperaturkühlmittelkreis (3) verbunden sind, und über ein Dreiwegeventil (434i, 343i; 434o, 343o) schaltbar mit der Zuführleitung und der Rückführleitung des anderen von der Niedrigtemperaturtauschstufe (14) und der Hochtemperaturtauschstufe (13) verbunden sind;
eine Pumpe (40), die den Niedrigtemperaturkühlmittelkreis (4) antreibt, der stromaufwärts von dem entsprechenden Dreiwegeventil (434i, 343i) angeordnet ist, durch das der Einlass der Niedrigtemperaturtauschstufe (14) schaltbar mit dem Niedrigtemperaturkühlmittelkreis (4) und mit der Zuführleitung der Hochtemperaturtauschstufe (13) verbunden ist;
einen Verbindungsluftkanal (12), der den Wasserladungsluftwärmetauscher (1) mit der Verbrennungskraftmaschine (2) verbindet;
eine Erfassungseinrichtung zum Erfassen der Ansaugtemperatur (T_{g2}) der Ladeluft in dem Verbindungsluftkanal (12) oder stromabwärts von dem Wasserladungsluftwärmetauscher (1);
eine Erfassungseinrichtung für zumindest einen Umgebungs- oder Antriebsstrang-Parameter des Fahrzeugs; und
eine Steuervorrichtung (5), die für die Ansaugtemperatur (T_{g2}) der Ladeluft mit der Erfassungseinrichtung verbunden ist und die für den zumindest einen Umgebungs- oder Antriebsstrang-Parameter des Fahrzeugs mit der Erfassungseinrichtung verbunden ist; wobei
die Steuervorrichtung (5) so konfiguriert ist, dass sie eine Solltemperatur für die Ansaugtemperatur der Ladeluft, die der Verbrennungskraftmaschine (2) zugeführt wird, gemäß dem zumindest einen Umgebungs- oder Antriebsstrang-Parameter auswählt; und wobei
die Kühlmittelkreise (3, 4) geeignet sind, so geschaltet zu werden, dass sie mit dem Wasserladungsluftwärmetauscher (1) verbunden oder von diesem getrennt sind, so dass die Ansaugtemperatur (T_{g2}) der Ladeluft auf die ausgewählte Solltemperatur erwärmt oder auf sie herabgekühlt wird.

2. System nach Anspruch 1, wobei
die Steuervorrichtung (5) mit der Pumpe (40) verbunden ist, die den Niedrigtemperaturkühlmittelkreis (4) antreibt; und so konfiguriert ist, dass in einem Heizmodus, wenn die Ladeluft auf die ausgewählte Solltemperatur aufgeheizt werden soll, die Antriebskraft der Pumpe (40) deaktiviert wird; oder
in einem Kühlmodus, wenn die Ladeluft auf die ausgewählte Solltemperatur herabgekühlt werden soll, die Antriebskraft der Pumpe (40) aktiviert und in einem Volumenstrom gesteuert wird.

3. System nach Anspruch 1 oder 2, wobei, in einem Heizmodus, wenn die Ladeluft auf die ausgewählte Solltemperatur aufgeheizt werden soll, die Dreiwegeventile (434i, 434o; 343i, 343o) so konfiguriert sind, dass sie so geschaltet werden, dass sie den Einlass und den Auslass der Hochtemperaturtauschstufe (13) mit dem Hochtemperaturkühlmittelkreis (3) verbinden; und
den Einlass und den Auslass der Niedrigtemperaturtauschstufe (14) von dem Niedrigtemperaturkühlmittelkreis (4) trennen.

4. System nach einem der Ansprüche 1 bis 3, wobei, in einem Kühlmodus, wenn die Ladeluft auf die ausgewählte Solltemperatur heruntergekühlt werden soll;
die Dreiwegeventile (434i, 434o; 343i, 343o) so konfiguriert sind, dass sie geschaltet werden, um den Einlass und den Auslass der Niedrigtemperaturtauschstufe (14) mit dem Niedrigtemperaturkühlmittelkreis (4) zu verbinden; und
den Einlass und den Auslass der Hochtemperaturtauschstufe (13) von dem Hochtemperaturkühlmittelkreis (3) zu trennen.

5. System nach einem der Ansprüche 1 bis 4, wobei
das Dreiwegeventil (431i; 434i; 343i) und das Dreiwegeventil (431o; 434; 343o) durch ein Sechswegeventil implementiert sind.

6. System zum Steuern einer Ansaugtemperatur (T_{g2}) einer Ladeluft, die einer Verbrennungskraftmaschine (2) eines Fahrzeugs zugeführt wird, wobei das System aufweist:
einen Wasserladungsluftwärmetauscher (1), der schaltbar mit einem Hochtemperaturkühlmittelkreis (3) und/oder mit einem Niedrigtemperaturkühlmittelkreis (4) verbunden ist, um Wärme zu tauschen, und einen Ladeluftkanal (16), der mit dem Wasserladungsluftwärmetauscher (1) operativ verbunden ist; wobei
der Wasserladungsluftwärmetauscher (1) eine Hochtemperaturtauschstufe (13) und eine Niedrigtemperaturtauschstufe (14) zum Tauschen von Wärme zwischen einem Kühlmittel und der Luft, die durch den Ladeluftkanal (16) geführt wird, aufweist;
wobei die Niedrigtemperaturtauschstufe (14) einen Einlass und einen Auslass aufweist, die mit dem Niedrigtemperaturkühlmittelkreis (4) durch eine Niedrigtemperaturzuführleitung und eine Niedrigtemperaturrückführleitung verbunden sind;
wobei die Hochtemperaturtauschstufe (13) einen Einlass und einen Auslass aufweist, die mit dem Hochtemperaturkühlmittelkreis (3) durch eine Hochtemperaturzuführleitung und eine Hochtemperaturrückführleitung verbunden sind;
wobei der Einlass und der Auslass von der Niedrigtemperaturtauschstufe (14) oder der Hochtemperaturtauschstufe (13) über ein Zweiwegeventil (44i, 44o; 33i, 33o) schaltbar mit dem entsprechenden von dem Niedrigtemperaturkühlmittelkreis (4) und dem Hochtemperaturkühlmittelkreis (3) verbunden sind; und
wobei derselbe Einlass und der Auslass schaltbar mit der Zuführleitung und der Rückführleitung des anderen von dem Niedrigtemperaturkühlmittelkreis (4) und dem Hochtemperaturkühlmittelkreis (3) über ein Zweiwegeventil (34i, 34o; 43i, 43o) in einer Zusammenschaltung, die zwischen den Zuführleitungen und zwischen den Rückführleitungen angeordnet ist, verbunden sind;
eine Pumpe (40), die den Niedrigtemperaturkühlmittelkreis (4) antreibt, der stromaufwärts von den entsprechenden Zweiwegeventilen (44i, 34i, 43i) angeordnet ist, durch die der Einlass der Niedrigtemperaturtauschstufe (14) schaltbar mit dem Niedrigtemperaturkühlmittelkreis (4) oder mit der Zuführleitung der Hochtemperaturtauschstufe (13) verbunden ist;
einen Verbindungsluftkanal (12), der den Wasserladungsluftwärmetauscher (1) mit der Verbrennungskraftmaschine (2) verbindet;
eine Erfassungseinrichtung zum Erfassen der Ansaugtemperatur (T_{g2}) der Ladeluft in dem Verbindungsluftkanal (12) oder stromabwärts von dem Wasserladungsluftwärmetauscher (1);
eine Erfassungseinrichtung für zumindest einen Umgebungs- oder Antriebsstrang-Parameter des Fahrzeugs; und
eine Steuervorrichtung (5), die mit der Erfassungseinrichtung für die Ansaugtemperatur (T_{g2}) der Ladeluft verbunden ist und mit der Erfassungseinrichtung für den zumindest einen Umgebungs- oder Antriebsstrang-Parameter des Fahrzeugs verbunden ist; wobei
die Steuervorrichtung (5) so konfiguriert ist, dass sie eine Solltemperatur für die Ansaugtemperatur der Ladeluft, die der Verbrennungskraftmaschine (2) gemäß dem erfassten zumindest einen Umgebungs- oder Antriebsstrang-Parameter zugeführt wird, auswählt; und wobei
die Kühlmittelkreise (3, 4) geeignet sind, so geschaltet zu werden, dass sie mit dem Wasserladungsluftwärmetauscher (1) verbunden oder von diesem getrennt sind, so dass die Ansaugtemperatur (T_{g2}) der Ladeluft auf die ausgewählte Solltemperatur erwärmt oder auf sie herabgekühlt wird.

7. System nach Anspruch 6, wobei
die Steuervorrichtung (5) mit der Pumpe (40) verbunden ist, die den Niedrigtemperaturkühlmittelkreis (4) antreibt; und so konfiguriert ist, dass in einem Heizmodus, wenn die Ladeluft auf die ausgewählte Solltemperatur aufgeheizt werden soll, die Antriebskraft der Pumpe (40) deaktiviert wird; oder
in einem Kühlmodus, wenn die Ladeluft auf die ausgewählte Solltemperatur herabgekühlt werden soll, die Antriebskraft der Pumpe (40) aktiviert und in einem Volumenstrom gesteuert wird.

8. System nach Anspruch 6 oder 7, wobei, in einem Heizmodus, wenn die Ladeluft auf die ausgewählte Solltemperatur aufgeheizt werden soll, die Zweiwegeventile (34i, 34o, 44i, 44o; 43i, 43o, 33i, 33o) so konfiguriert sind, dass sie so geschaltet werden, dass sie den Einlass und den Auslass der Hochtemperaturtauschstufe (13) mit dem Hochtemperaturkühlmittelkreis (3) verbinden; und
den Einlass und den Auslass der Niedrigtemperaturtauschstufe (14) von dem Niedrigtemperaturkühlmittelkreis (4) trennen.

9. System nach einem der Ansprüche 6 bis 8, wobei, in einem Kühlmodus, wenn die Ladeluft auf die ausgewählte Solltemperatur heruntergekühlt werden soll;
die Zweiwegeventile (34i, 34o, 44i, 44o; 43i, 43o, 33i, 33o) so konfiguriert sind, dass sie geschaltet werden, um den Einlass und den Auslass der Niedrigtemperaturtauschstufe (14) mit dem Niedrigtemperaturkühlmittelkreis (4) zu verbinden; und
den Einlass und den Auslass der Hochtemperaturtauschstufe (13) von dem Hochtemperaturkühlmittelkreis (3) zu trennen.

10. System nach einem der Ansprüche 6 bis 9, wobei
zwei der Zweiwegeventile (34i, 34o, 43i, 43o) durch ein Vierwegeventil implementiert sind; und
zwei der Zweiwegeventile (44i, 44o, 33i, 33o) durch ein Vierwegventil implementiert sind.

11. System nach einem der vorgenannten Ansprüche, wobei der zumindest eine Umgebungs- oder Antriebsstrang-Parameter des Fahrzeugs (7) aus Folgendem ausgewählt wird:
einer Umgebungstemperatur, einer Gastemperatur des Ansaugkrümmers, einer Abgastemperatur stromaufwärts einer Abgasnachbehandlungsvorrichtung, die in einem Abgasstrang der Verbrennungskraftmaschine (2) angeordnet ist, einen Parameter, der einen selektivkatalytischen Reduktionsstatus anzeigt und/oder einen Parameter, der einen Maschinenbetriebszustand anzeigt.

12. System nach einem der vorgenannten Ansprüche, wobei die Steuervorrichtung (5) geeignet ist, für die Solltemperatur für die Ansaugtemperatur der Ladeluft aus einem von zwei vorgegebenen Solltemperaturwerten auszuwählen (T_{Low/High}).

## Revendications

1. Système permettant de réguler une température d'admission (T_{g2}) d'un air de suralimentation, qui est introduit dans un moteur à combustion interne (2) d'un véhicule, dans lequel le système comprend :
un échangeur de chaleur eau-air de suralimentation (1), qui est relié de manière commutable à une boucle de refroidissement haute température (3) et/ou à une boucle de refroidissement basse température (4) pour échanger de la chaleur, et
un conduit d'air de suralimentation (16) relié de manière fonctionnelle à l'échangeur de chaleur eau-air de suralimentation (1) ; dans lequel
l'échangeur de chaleur eau-air de suralimentation (1) comprend un étage d'échange haute température (13) et un étage d'échange basse température (14) permettant respectivement d'échanger de la chaleur entre un liquide de refroidissement et l'air conduit à travers le conduit d'air de suralimentation (16) ;
l'étage d'échange basse température (14) ayant une entrée et une sortie reliées à la boucle de refroidissement basse température (4) par une ligne d'alimentation et une ligne de retour ;
l'étage d'échange haute température (13) ayant une entrée et une sortie reliées à la boucle de refroidissement haute température (3) par une ligne d'alimentation et une ligne de retour ; et
l'entrée et la sortie d'un de l'étage d'échange basse température (14) et de l'étage d'échange haute température (13) sont reliées de manière commutable à la boucle correspondante de la boucle de refroidissement basse température (4) et de la boucle de refroidissement haute température (3), et sont reliées de manière commutable à la ligne d'alimentation et la ligne de retour de l'autre de l'étage d'échange basse température (14) et de l'étage d'échange haute température (13) via une soupape à trois voies (434i, 343i ; 434o, 343o), respectivement ;
une pompe (40) entraînant la boucle de refroidissement basse température (4) qui est agencée en amont de la soupape à trois voies respective (434i, 343i) par laquelle l'entrée de l'étage d'échange basse température (14) est reliée de manière commutable à la boucle de refroidissement basse température (4) et à la ligne d'alimentation de l'étage d'échange haute température (13) ;
un conduit d'air de liaison (12) qui relie l'échangeur de chaleur eau-air de suralimentation (1) au moteur à combustion interne (2) ;
des moyens de détection pour détecter la température d'admission (T_{g2}) de l'air de suralimentation dans le conduit d'air de liaison (12) ou en aval de l'échangeur de chaleur eau-air de suralimentation (1) ;
des moyens de détection pour au moins un paramètre environnemental ou de groupe motopropulseur du véhicule ; et
un dispositif de régulation (5) qui est couplé aux moyens de détection pour la température d'admission (T_{g2}) de l'air de suralimentation et qui est couplé aux moyens de détection pour l'au moins un paramètre environnemental ou de groupe motopropulseur du véhicule ; dans lequel
le dispositif de régulation (5) est configuré pour choisir une température cible pour la température d'admission de l'air de suralimentation qui est introduit dans le moteur à combustion interne (2) en fonction de l'au moins un paramètre environnemental ou de groupe motopropulseur détecté ; et dans lequel
les boucles de refroidissement (3, 4) sont conçues pour être commutées pour être reliées ou débranchées à/de l'échangeur de chaleur eau-air de suralimentation (1) de sorte que la température d'admission (T_{g2}) de l'air de suralimentation est réchauffée ou refroidie à la température cible choisie.

2. Système selon la revendication 1, dans lequel
le dispositif de régulation (5) est couplé à la pompe (40) entraînant la boucle de refroidissement basse température (4) ; et configuré de sorte que
dans un mode de chauffage, lorsque l'air de suralimentation doit être réchauffé à la température cible choisie, la puissance d'entraînement de la pompe (40) est désactivée ; ou
dans un mode de refroidissement, lorsque l'air de suralimentation doit être refroidi à la température cible choisie, la puissance d'entraînement de la pompe (40) est activée et régulée dans un débit volumétrique.

3. Système selon la revendication 1 ou 2, dans lequel, dans un mode de chauffage, lorsque l'air de suralimentation doit être réchauffé à la température cible choisie,
les soupapes à trois voies (434i, 434o ; 343i, 343o) sont configurées pour être commutées pour relier l'entrée et la sortie de l'étage d'échange haute température (13) à la boucle de refroidissement haute température (3) ; et
pour débrancher l'entrée et la sortie de l'étage d'échange basse température (14) de la boucle de refroidissement basse température (4).

4. Système selon l'une des revendications 1 à 3, dans lequel, dans un mode de refroidissement, lorsque l'air de suralimentation doit être refroidi à la température cible choisie,
les soupapes à trois voies (434i, 434o ; 343i, 343o) sont configurées pour être commutées pour relier l'entrée et la sortie de l'étage d'échange basse température (14) à la boucle de refroidissement basse température (4) ; et
pour débrancher respectivement l'entrée et la sortie de l'étage d'échange haute température (13) de la boucle de refroidissement haute température (3).

5. Système selon l'une des revendications 1 à 4, dans lequel
la soupape à trois voies (431i ; 434i ; 343i) et la soupape à trois voies (431o ; 434 ; 343o) sont réalisées par une soupape à six voies.

6. Système permettant de réguler une température d'admission (T_{g2}) d'un air de suralimentation, qui est introduit dans un moteur à combustion interne (2) d'un véhicule, dans lequel le système comprend :
un échangeur de chaleur eau-air de suralimentation (1), qui est relié de manière commutable à une boucle de refroidissement haute température (3) et/ou à une boucle de refroidissement basse température (4) pour échanger de la chaleur, et
un conduit d'air de suralimentation (16) relié de manière fonctionnelle à l'échangeur de chaleur eau-air de suralimentation (1) ; dans lequel
l'échangeur de chaleur eau-air de suralimentation (1) comprend un étage d'échange haute température (13) et un étage d'échange basse température (14) permettant d'échanger respectivement de la chaleur entre un liquide de refroidissement et l'air conduit à travers le conduit d'air de suralimentation (16) ;
l'étage d'échange basse température (14) ayant une entrée et une sortie reliées à la boucle de refroidissement basse température (4) par une ligne d'alimentation basse température et une ligne de retour basse température ;
l'étage d'échange haute température (13) ayant une entrée et une sortie reliées à la boucle de refroidissement haute température (3) par une ligne d'alimentation haute température et une ligne de retour haute température ; et
l'entrée et la sortie d'un de l'étage d'échange basse température (14) et de l'étage d'échange haute température (13) sont reliées de manière commutable à la boucle correspondante de la boucle de refroidissement basse température (4) et de la boucle de refroidissement haute température (3) via une soupape à deux voies (44i, 44o ; 33i, 33o) ; et
la même entrée et la sortie sont reliées de manière commutable à la ligne d'alimentation et à la ligne de retour de l'autre de la boucle de refroidissement basse température (4) et de la boucle de refroidissement haute température (3) via une soupape à deux voies (34i, 34o ; 43i, 43o) dans une interconnexion agencée entre les lignes d'alimentation et entre les lignes de retour, respectivement ;
une pompe (40) entraînant la boucle de refroidissement basse température (4) qui est agencée en amont des soupapes à deux voies respectives (44i, 34i, 43i) par lesquelles l'entrée de l'étage d'échange basse température (14) est reliée de manière commutable à la boucle de refroidissement basse température (4) ou à la ligne d'alimentation de l'étage d'échange haute température (13) ;
un conduit d'air de liaison (12) qui relie l'échangeur de chaleur eau-air de suralimentation (1) au moteur à combustion interne (2) ;
des moyens de détection pour détecter la température d'admission (T_{g2}) de l'air de suralimentation dans le conduit d'air de liaison (12) ou en aval de l'échangeur de chaleur eau-air de suralimentation (1) ;
des moyens de détection pour au moins un paramètre environnemental ou de groupe motopropulseur du véhicule ; et
un dispositif de régulation (5) qui est couplé aux moyens de détection pour la température d'admission (T_{g2}) de l'air de suralimentation et qui est couplé aux moyens de détection pour l'au moins un paramètre environnemental ou de groupe motopropulseur du véhicule ; dans lequel
le dispositif de régulation (5) est configuré pour choisir une température cible pour la température d'admission de l'air de suralimentation qui est introduit dans le moteur à combustion interne (2) en fonction de l'au moins un paramètre environnemental ou de groupe motopropulseur détecté ; et dans lequel
les boucles de refroidissement (3, 4) sont conçues pour être commutées pour être reliées ou débranchées à/de l'échangeur de chaleur eau-air de suralimentation (1) de sorte que la température d'admission (T_{g2}) de l'air de suralimentation est réchauffée ou refroidie à la température cible choisie.

7. Système selon la revendication 6, dans lequel
le dispositif de régulation (5) est couplé à la pompe (40) entraînant la boucle de refroidissement basse température (4) ; et configuré de sorte que
dans un mode de chauffage, lorsque l'air de suralimentation doit être réchauffé à la température cible choisie, la puissance d'entraînement de la pompe (40) est désactivée ; ou
dans un mode de refroidissement, lorsque l'air de suralimentation doit être refroidi à la température cible choisie, la puissance d'entraînement de la pompe (40) est activée et régulée dans un débit volumétrique.

8. Système selon la revendication 6 ou 7, dans lequel, dans un mode de chauffage, lorsque l'air de suralimentation doit être réchauffé à la température cible choisie,
les soupapes à deux voies (34i, 34o, 44i, 44o, 43i, 43o, 33i, 33o) sont configurées pour être commutées pour relier l'entrée et la sortie de l'étage d'échange haute température (13) à la boucle de refroidissement haute température (3) ; et
pour débrancher l'entrée et la sortie de l'étage d'échange basse température (14) de la boucle de refroidissement basse température (4).

9. Système selon l'une des revendications 6 à 8, dans lequel, dans un mode de refroidissement, lorsque l'air de suralimentation doit être refroidi à la température cible choisie ;
les soupapes à deux voies (34i, 34o, 44i, 44o, 43i, 43o, 33i, 33o) sont configurées pour être commutées pour relier l'entrée et la sortie de l'étage d'échange basse température (14) à la boucle de refroidissement basse température (4) ; et
pour débrancher respectivement l'entrée et la sortie de l'étage d'échange haute température (13) de la boucle de refroidissement haute température (3).

10. Système selon l'une des revendications 6 à 9, dans lequel deux des soupapes à deux voies (34i, 34o, 43i, 43o) sont réalisées par une soupape à quatre voies ; et
deux des soupapes à deux voies (44i, 44o, 33i, 33o) sont réalisées par une soupape à quatre voies.

11. Système selon l'une des revendications précédentes, dans lequel l'au moins un paramètre environnemental ou de groupe motopropulseur du véhicule (7) est choisi parmi :
une température ambiante, une température de gaz du collecteur d'admission, une température de gaz d'échappement en amont d'un dispositif de post-traitement du gaz d'échappement agencé dans une ligne d'échappement du moteur à combustion interne (2), un paramètre indiquant un état de réduction catalytique sélective et/ou un paramètre indiquant une condition de fonctionnement du moteur.

12. Système selon l'une des revendications précédentes, dans lequel le dispositif de régulation (5) est conçu pour choisir, en tant que température cible pour la température d'admission de l'air de suralimentation, entre l'un des deux niveaux de température cible prédéterminés (T_{Basse/Haute}).
